# EUROPÄISCHE PATENTSCHRIFT

(11) **EP 0 840 487 B1**
(45) Veröffentlichungstag und Bekanntmachung des Hinweises auf die Patenterteilung: **15.12.2004**
(21) Anmeldenummer: 97117314.1
(22) Anmeldetag: 07.10.1997
(51) Int. Cl.: H04M 1/00, H04M 1/27, H04M 1/72

(54) **Kommunikationseinrichtung**
Communication device
Dispositif de communication

(30) Priorität: 31.10.1996 DE 19644104
(43) Veröffentlichungstag der Anmeldung: 06.05.1998
(73) Patentinhaber: Nokia Corporation, 02150 Espoo (FI)
(72) Erfinder: Lieben, Jan, 7101 VW Winterswijk (NL); Jobst, Matthias, 44789 Bochum (DE)
(74) Vertreter: TER MEER STEINMEISTER & PARTNER GbR

(56) Entgegenhaltungen:
- DE-A- 4 107 365
- US-A- 4 928 302
- US-A- 5 301 227

## Beschreibung

Die Erfindung betrifft eine Kommunikationseinrichtung gemäß dem Gegenstand des Patentanspruchs 1.

Es ist bereits eine Kommunikationseinrichtung aus Dokument US-5301227 bekannt, die aus einem Telefongerät mit integrierter Sprachwähleinrichtung besteht. Letztere läßt sich vom Telefongerät allerdings nicht mechanisch abtrennen, so daß sich ein Problem beim mobilen Einsatz dieser Kommunikationseinrichtung ergibt. Da Sprachwähleinrichtung und Telefongerät in einem Gehäuse untergebracht sind, kommt auch nur ein Kurzwahlspeicher zum Einsatz, in welchem unter jeweils einer vorbestimmten Speicherplatzadresse ein Name mit zugehöriger Telefonnummer gespeichert ist, um bei akustischer Eingabe eines Namens in die Sprachwähleinrichtung die zugehörige Telefonnummer aufzurufen und einen Wählvorgang einzuleiten.

Ferner ist es bereits bekannt, zur Bildung einer Kommunikationseinrichtung ein Telefongerät zum Beispiel über ein Kabel mit einem Kommunikationsgerät zu verbinden. Hier kann es sich um einen Drucker handeln. über den sich vom Telefongerät empfangene Daten ausdrucken lassen. Der im Drucker vorhandene Datenspeicher kann jedoch nicht als Kurzwahlspeicher für die Durchführung eines Wählvorgangs verwendet werden.

Der Erfindung liegt die Aufgabe zugrunde, eine weitere Kommunikationseinrichtung zu schaffen, die flexiblere Einsatzmöglichkeiten eines zu ihr gehörenden Telefons bei gleichzeitig geringem Speicherverwaltungsaufwand bietet.

Eine Kommunikationseinrichtung nach der Erfindung umfaßt ein Telefongerät, daß eine erste Steuereinrichtung und einen Hauptdatenspeicher zur Speicherung erster Daten aufweist, und wenigstens ein mit dem Telefongerät verbindbares Dateneingabegerät, das eine zweite Steuereinrichtung und einen Hilfsdatenspeicher zur Speicherung von einen Teil der ersten Daten repräsentierenden zweiten Daten aufweist, über die auf die ersten Daten zugegriffen werden kann.

Die Kommunikationseinrichtung nach der Erfindung bietet somit die Möglichkeit, das Telefongerät bei mit ihm verbundener Dateneingabeeinrichtung über die Dateneingabeeinrichtung anzusteuern, um einen Wählvorgang zu veranlassen und ein Telefongespräch auszuführen. Dabei wird über den als Kurzwahlspeicher dienenden Hilfsdatenspeicher eine Telefonnummer im Hauptdatenspeicher des Telefongeräts aufgesucht. Die Telefonnummer selbst braucht im Hilfsdatenspeicher nicht gespeichert zu sein, was eine einfachere Datenverwaltung bedeutet.

Andererseits kann das Telefongerät aber auch vom Dateneingabegerät abgetrennt werden. Das Telefongerät läßt sich dann in herkömmlicher Weise verwenden. Handelt es sich um ein Mobiltelefon, so kann es vom Benutzer mitgenommen werden, während das Dateneingabegerät an seinem ursprünglichen Platz verbleibt.

Beim Dateneingabegerät kann es sich um ein Sprachwählgerät zur akustischen Eingabe von Information, um ein optisches Abtastgerät zur optischen Eingabe von Information oder um eine elektronische Schnittstelle handeln, beispielsweise um eine ISDN Schnittstelle. Das optische Abtastgerät kann zum Beispiel mit Infrarotstrahlung arbeiten.

Im Falle des akustischen Sprachwählgerätes zur akustischen Eingabe von Information kann dieses zum Beispiel in einem Kraftfahrzeug fest installiert sein. Verbindet der Fahrer sein Mobiltelefon mit dem im Kraftfahrzeug installierten Sprachwählgerät, so kann er das Mobiltelefon über das Sprachwählgerät bedienen. Verläßt er das Kraftfahrzeug, nimmt er lediglich das Mobiltelefon mit und ist somit auch weiterhin kommunikationsfähig.

Nach einer sehr vorteilhaften Weiterbildung der Erfindung sind die Steuereinheit des Telefongerätes und die Steuereinheit des Dateneingabegerätes so ausgebildet, daß durch sie bei einer Datenänderung in einem der Datenspeicher (Hauptdatenspeicher bzw. Hilfsdatenspeicher) eine entsprechende Änderung der ihnen zugeordneten Daten im anderen der Datenspeicher vornehmbar ist.

Hierdurch wird eine ganz erhebliche Vereinfachung der Datenverwaltung erzielt, da bei einer Datenänderung in einem der Datenspeicher der Dateninhalt im anderen Datenspeicher automatisch aktualisiert bzw. angeglichen wird.

Um größtmöglichste Flexibilität für den Benutzer zu erhalten, dient der im Telefon vorhandene Hauptdatenspeicher als Masterspeicher und der im Dateneingabegerät vorhandene Hilfsdatenspeicher als Slavespeicher. Das Telefongerät ist dann mit Mitteln zur Eingabe von Befehlen bezüglich einer Änderung der im Hauptdatenspeicher gespeicherten ersten Daten versehen.

Nach einer noch weiteren vorteilhaften Ausgestaltung der Erfindung sind Vergleichsmittel vorgesehen, und zwar zum Vergleichen von zu ändernden Daten in einem der Datenspeicher mit ihnen zugeordneten Daten im anderen der Datenspeicher vor einer Datenänderung. Hierdurch wird in besonderer Weise sichergestellt, daß immer nur einander zugeordnete Daten im Hauptdatenspeicher und Hilfsdatenspeicher verändert werden können. Die Vergleichsmittel befinden sich vorzugsweise im Telefongerät.

Gemäß einer noch weiteren vorteilhaften Ausgestaltung der Erfindung Ist den jeweiligen Daten im Hauptdatenspeicher eine Kennung des mit dem Telefongerät verbindbaren Dateneingabegerätes zugeordnet. Hierdurch wird gewährleistet, daß sich Daten im Hauptdatenspeicher, die sich zum Teil auch im Hilfsdatenspeicher des Dateneingabegerätes befinden, immer nur dann ändern lassen, wenn das Dateneingabegerät mit dem Telefongerät auch tatsächlich verbunden ist. Den Verbindungszustand kann das Dateneingabegerät dem Telefongerät melden, oder er wird vom Telefongerät abgefragt. Dem Benutzer steht es allerdings frei, bei Bedarf eine Kennung im Hauptdatenspeicher zu übergehen.

Es sei noch darauf hingewiesen, daß natürlich auch mehrere unterschiedliche Dateneingabegeräte gleichzeitig mit dem Telefongerät verbunden sein können. In diesem Fall gilt fürjedes dieser Dateneingabegeräte das oben Gesagte entsprechend.

Die Inhalte von Hauptdatenspeicher und Hilfsdatenspeicher können bei Inbetriebnahme des Systems getrennt eingegeben werden. Unter den jeweiligen Speicherplatznummern im Hauptdatenspeicher stünden dann jeweils Name und Telefonnummer eines Teilnehmers sowie gegebenenfalls die oben erwähnte Kennung. In den Hilfsdatenspeicher sind dann der Name des Teilnehmers und die jeweils zugeordnete Speicherplatznummer des Hauptdatenspeichers einzugeben. Alles kann manuell erfolgen. Allerdings lassen sich die Daten im Hilfsdatenspeicher auch automatisch programmieren, wenn sie nach Programmierung des Hauptdatenspeichers aus diesem ausgelesen und in den Hilfsdatenspeicher übertragen werden. Hierdurch läßt sich die Datenverwaltung noch weiter vereinfachen.

Die Erfindung wird nachfolgend unter Bezugnahme auf die Zeichnung näher erläutert. Es zeigen:
- **Fig. 1**: eine Kommunikationseinrichtung mit einem Sprachwählgerät als Dateneingabegerät und einem mit dem Sprachwählgerät verbundenen Telefongerät:
- **Fig. 2**: eine Kommunikationseinrichtung mit einem Telefongerät und mehreren mit ihr verbundenen, unterschiedlichen Dateneingabegeräten:
- **Fig. 3**: ein Flußdiagramm zur Erläuterung der Eingabe von Daten in den Hauptdatenspeicher des Telefongeräts;
- **Fig. 4**: ein Flußdiagramm zur Erläuterung der Eingabe von Daten in den Hilfsdatenspeicher des mit dem Telefongerät verbundenen Sprachwählgeräts;
- **Fig. 5**: ein Signalablaufdiagramm eines Wählvorganges über das Sprachwählgerät; und
- **Fig. 6**: ein Signalablaufdiagramm bei einer Änderung von Daten im Hauptspeicher des Telefongeräts und einer zugehörigen Änderung von Daten im Hilfsspeicher des mit dem Telefongerät verbundenen Sprachwählgeräts.

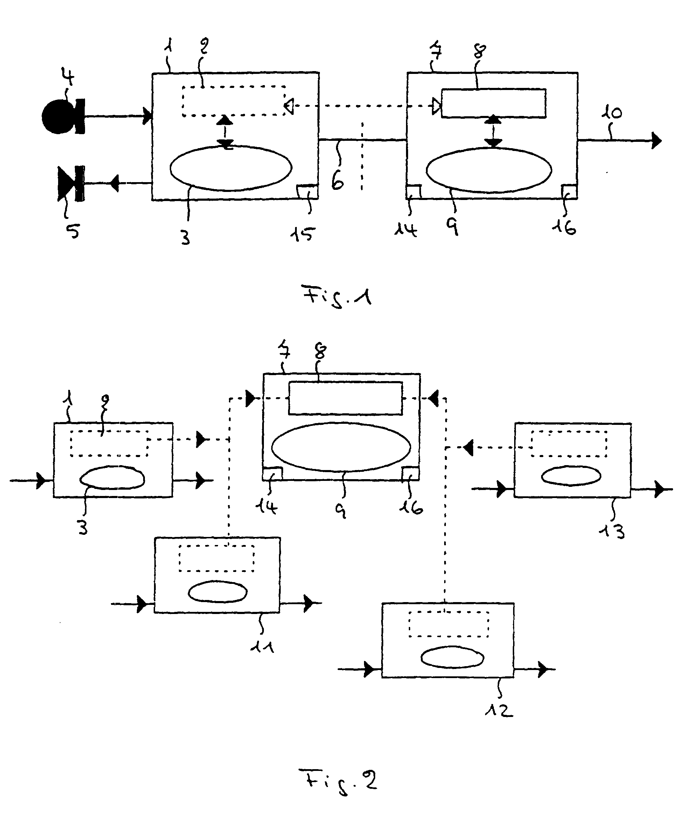

Die Fig. 1 zeigt ein erstes Ausführungsbeispiel einer Kommunikationseinrichtung nach der Erfindung. Sie enthält ein Sprachwählgerät 1, in welchem sich ein Kurzwahlspeicher 2 und eine Steuereinrichtung 3 befinden, die Zugriff auf den Kurzwahlspeicher 2 hat. Das Sprachwählgerät 1 weist darüber hinaus ein Mikrofon 4 zur akustischen Eingabe von Information und einen Lautsprecher 5 zur akustischen Ausgabe von Information auf. Die Informationsein- und -ausgabe über Mikrofon 4 und Lautsprecher 5 erfolgt unter Steuerung der Steuereinrichtung 3, die auch das Speichern von Information im Kurzwahlspeicher 2 und das Auslesen von Information aus diesem Kurzwahlspeicher 2 übernimmt. Der Kurzwahlspeicher 2 sei in diesem Fall als Hilfsdatenspeicher bezeichnet.

Über ein Kabel 6 steht das Sprachwählgerät 1 mit einem Mobiltelefon 7 in Verbindung. Das Mobiltelefon 7 ist in üblicher Weise aufgebaut und enthält einen Hauptdatenspeicher 8 sowie eine Steuereinrichtung 9, die Zugriff auf den Hauptdatenspeicher 8 hat. Mit dem Bezugszeichen 10 ist eine Antenne des Mobiltelefons 7 versehen.

Das Sprachwählgerät 1 kann zum Beispiel in einem Kraftfahrzeug fest installiert sein. Dabei kann es eine Halterung zur Aufnahme des Mobiltelefons 7 aufweisen, das dann über das Kabel 6 mit der Sprachwähleinheit 1 verbunden werden kann. Statt des Kabels 6 kann auch eine Steckereinrichtung zur Herstellung eines Kontakts zwischen Sprachwählgerät 1 und Mobiltelefon 7 verwendet werden.

Im Kurzwahlspeicher 2 bzw. Hilfsdatenspeicher des Sprachwählgerätes 1 sind unter einer jeweiligen Speicheradresse jeweils der Name eines Teilnehmers und die zugehörige Speicherplatzadresse des Hauptdatenspeichers 8 gespeichert, unter der der Name dieses Teilnehmers ebenfalls erscheint. Dagegen stehen im Hauptdatenspeicher 8 des Mobiltelefons 7 unter einerjeweiligen Speicherplatzadresse der Name eines Teilnehmers, die Telefonnummer dieses Teilnehmers und eventuell eine zugehörige Kennung über die Art des mit dem Mobiltelefons 7 verbundenen Dateneingabegerätes in diesem Fall eine Kennung des Sprachwählgerätes 1.

Die folgende Tabelle gibt die Belegung im Hilfsdatenspeicher 2 und Hauptdatenspeicher 8 wieder. Dabei bedeutet SW die Kennung des Sprachwählgeräts 1:

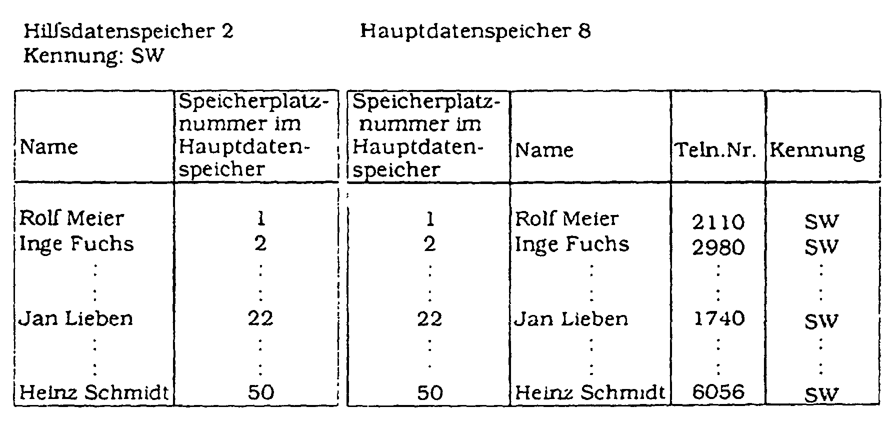

Die Fig. 2 zeigt eine Erweiterung der Kommunikationseinrichtung nach Fig. 1, wobei gleiche Teile mit den gleichen Bezugszeichen versehen sind. Wie zu erkennen ist, kann hier das Mobiltelefon 7 mit mehreren unterschiedlichen Dateneingabegeräten 3, 11, 12 und 13 verbunden sein. Bei dem Dateneingabegerät 11 kann es sich um ein Infrarotsystem zur optischen Abtastung von zum Beispiel Namen handeln, die dann im Kurzwahlspeicher dieses Geräts abgelegt werden, wie dies auch beim Sprachwählgerät 1 der Fall ist. Entsprechend kann das Dateneingabegerät 12 als ISDN Schnittstelle ausgebildet sein, um auf elektronischem Wege zum Beispiel Namen in dessen Kurzwahlspeicher einschreiben zu können. Das Datengerät 13 kann ein noch weiteres geeignetes Gerät sein. Möglich ist es dabei, mit dem Mobiltelefon 7 alle Dateneingabegeräte 3, 11, 12 und 13 gleichzeitig zu verbinden. Dabei befinden sich die Dateneingabegeräte 3, 11, 12 und 13 dann am selben Ort. Eine andere Variante besteht darin, die Dateneingabegeräte 3, 11, 12 und 13 jeweils zu getrennten Zeiten mit dem Mobiltelefon 7 zu verbinden, wobei sich dann die Dateneingabegeräte 3, 11, 12 und 13 an unterschiedlichen Orten befinden können.

Dabei können die Speicherinhalte der Kurzwahlspeicher der Dateneingabegeräte 3, 11, 12 und 13 einerseits und der Dateninhalt des Hauptdatenspeichers 8 des Mobiltelefons 7 andererseits in gleicher Weise wie in der obigen Tabelle angegeben, organisiert sein. Jedes Dateneingabegerät weist dann aber eine andere Kennung auf.

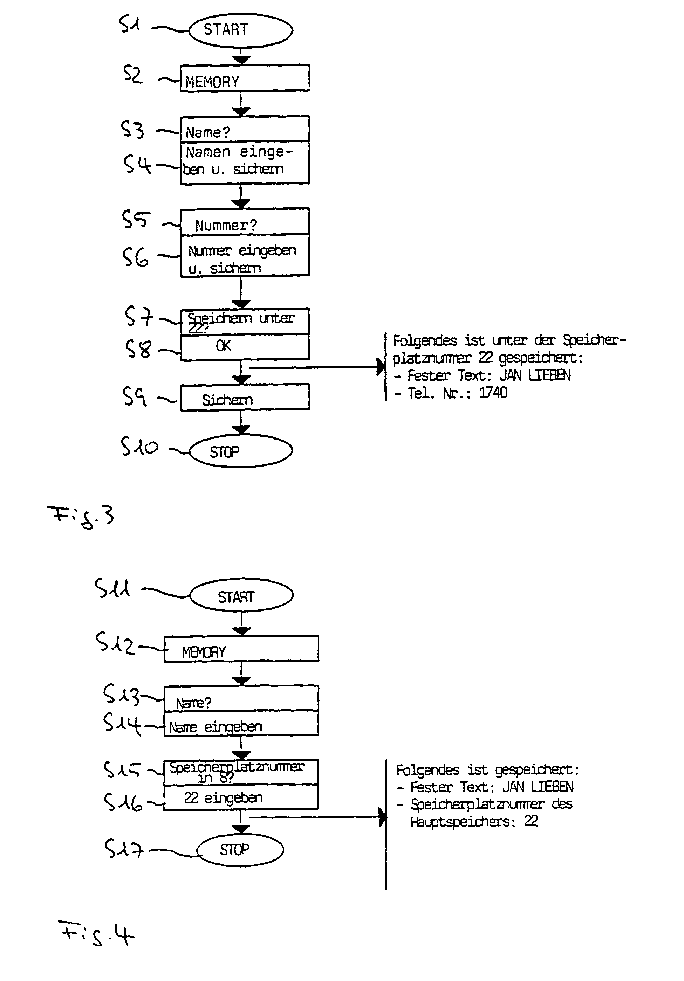

Im folgenden wird unter Bezugnahme auf die Fig. 3 das Einspeichern der Daten im Hauptspeicher 8 des Mobiltelefons 7 näher beschrieben. Es wird also zunächst nur das Mobiltelefon 7 betätigt, wobei angenommen wird, daß unter der Speicherplatznummer 22 im Hauptdatenspeicher 8 der Name "Jan Lieben" mit zugehöriger Telefonnummer gespeichert werden soll. Nach dem Start des Mobiltelefons 7 im Schritt S1 wird zunächst die Taste MEMORY im Tasteneingabefeld 14 des Mobiltelefons 7 gedrückt. und zwar im Schritt S2. Auf dem Display des Mobiltelefons 7 erscheint dann im Schritt S3 die Angabe "Name", was bedeutet, daß das Mobiltelefon 7 jetzt die Eingabe des zu speichernden Namens erbittet. Im nachfolgenden Schritt S4 wird der Name "Jan Lieben" durch Betätigung des Tasteneingabefeldes 14 des Mobiltelefons 7 eingegeben und anschließend durch Betätigen einer Sicherungstaste gesichert. Danach erscheint auf dem Display des Mobiltelefons 7 im Schritt S5 die Angabe "Nummer", was bedeutet, daß das Mobiltelefon 7 nunmehr die Eingabe der Telefonnummer des zuvor gespeicherten Teilnehmers erbittet. Die Telefonnummer wird dann im Schritt S6 durch Betätigen des Tasteneingabefeldes 14 des Mobiltelefons 7 eingegeben und gesichert. Die Nummer von "Jan Lieben" ist im vorliegenden Fall 1740. Im Schritt S7 wird über das Display des Mobiltelefons 7 gefragt, ob der zuvor eingegebene Name des Teilnehmers und dessen Telefonnummer unter einer bestimmten Speicherplatznummer im Hauptdatenspeicher 8 gespeichert werden sollen. Geeignete Speicherplatznummern können entweder manuell aufgerufen werden, oder sie werden bei jedem Programmdurchlauf des Flußdiagramms in Fig. 3 zyklisch verändert. Im vorliegenden Fall wird also über das Display des Mobiltelefons 7 gefragt, ob die zuvor eingegebenen Daten unter Speicherplatznummer 22 abgelegt werden sollen. Falls ja, wird im Schritt S8 eine Bestätigungstaste OK des Tasteneingabefeldes 14 gedrückt. Im nachfolgenden Schritt S9 wird die Abspeicherung der Daten im Hauptdatenspeicher 8 gesichert und das Programm endet im Schritt S10.

Nach dem Programmschritt S8 sind also folgende Daten im Hauptdatenspeicher 8 des Mobiltelefons 7 unter der Speicherplatznummer 22 gespeichert: Jan Lieben (als fester Text) und 1740 als zugehörige Telefonnummer. Durch Ausführen weiterer Schritte zwischen den Schritten S9 und S10 kann auch zu jeder Speicherplatznummer des Hauptdatenspeichers 8 eine entsprechende Kennung manuell eingegeben werden, die das Dateneingabegerät charakterisiert, das später mit dem Mobiltelefon 7 verbunden wird. Im vorliegenden Fall würde hier also die Kennung SW eingegeben werden, also diejenige für das Sprachwählgerät 1.

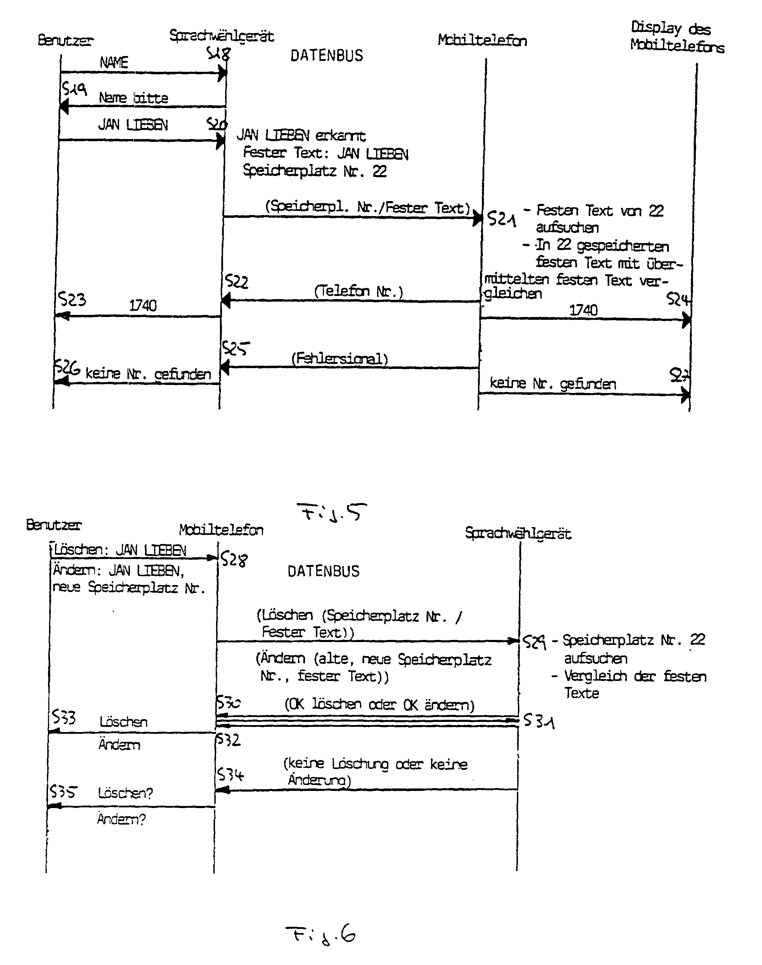

Es soll nun unter Bezugnahme auf das Flußdiagramm von Fig. 4 beschrieben werden, wie im Kurzwahlspeicher 2 des Sprachwählgerätes 1 der Name "Jan Lieben" und die Speicherplatznummer des Hauptdatenspeichers 8 des Mobiltelefons 7 gespeichert werden, unter der der Name "Jan Lieben" im Hauptdatenspeicher 8 steht. Zu diesem Zweck wird nur das Sprachwählgerät 1 bedient.

Nach dem Start des Sprachwählgerätes 1 im Schritt S11 führt sich der Benutzer zunächst selbst zum Speicherprogramm der Menüstruktur des Sprachwählgerätes 1. Dies erfolgt im Schritt S12. Im nächsten Schritt S13 erfragt das Sprachwählgerät 1 auf akustischem Wege über seinen Lautsprecher 5 den zu speichernden Namen des Teilnehmers (Jan Lieben). Im Schritt S14 gibt dann der Benutzer auf akustischem Wege über das Mikrofon 4 den erfragten Namen ein. Danach erfragt das Sprachwählgerät 1 im Schritt S15 die Speicherplatznummer des Hauptdatenspeichers 8 des Mobiltelefons 7, unter der der zuvor eingegebene Name (Jan Lieben) abgespelchert ist. Sollte der Benutzer diese Speicherplatznummer nicht mehr wissen, so kann er zu diesem Zweck das Mobiltelefon 7 entsprechend abfragen, indem er beispielsweise den Namen "Jan Lieben" im Mobiltelefon aufsucht und die zugeordnete Speicherplatznummer ausliest. Diese Speicherplatznummer (22) wird dann im nachfolgenden Schritt S16 entweder ebenfalls akustisch oder durch entsprechende Tastenbetätigung eines zum Sprachwählgerät 1 gehörenden Tasteneingabefeldes 15 eingegeben. Anschließend wird die Eingabe gesichert. Danach endet das Programm im Schritt S17.

Nach dem Schritt S16 ist also folgendes im Hilfsdatenspeicher 2 des Sprachwählgerätes 1 gespeichert: Der Name "Jan Lieben" zusammen mit der zu ihm gehörenden Speicherplatznummer 22, unter der dieser Name auch im Hauptdatenspeicher 8 des Mobiltelefons 7 abgelegt ist.

Es sei darauf hingewiesen, daß der Speichervorgang beim Sprachwählgerät 1 durchgeführt werden kann, auch wenn dieses nicht mit dem Mobiltelefon 7 verbunden ist. Ist dagegen das Sprachwählgerät 1 mit dem Mobiltelefon 7 verbunden, und wird in das Sprachwählgerät 1 entsprechend dem Flußdiagramm nach Fig. 4 Information eingeschrieben, so kann nach akustischer Eingabe des Namens "Jan Lieben" in Schritt S14 und nach Erkennen dieses Namens dieser Name auch aus dem Hauptdatenspeicher 8 des Mobiltelefons 7 aufgerufen und zum Sprachwählgerät 1 übertragen werden. Für diesen Vorgang muß dann bei der Eingabe des Namens in das Sprachwählgerät 1 die Information abrufbereit sein, die im Hauptdatenspeicher 8 unter der Speicherplatznummer 22 steht.

Unter Bezugnahme auf die Fig. 5 wird nachfolgend die Kommunikation zwischen Sprachwählgerät 1 und Mobiltelefon 7 im einzelnen erläutert, wobei beide Einrichtungen miteinander verbunden sind. Genauer gesagt ist ein Wählvorgang betroffen.

Im Schritt S18 gibt der Benutzer auf akustischem Wege über das Mikrofon 4 den Befehl "Name" in das Sprachwählgerät 1 ein. Das Sprachwählgerät 1 gibt dann im Schritt S19 die Antwort "Name bitte" akustisch über den Lautsprecher 5 zum Benutzer aus. Daraufhin gibt der Benutzer im Schritt S20 auf akustischem Wege den Namen "Jan Lieben" über das Mikrofon 4 ein. Das Sprachwählgerät 1 erkennt nunmehr den Namen Jan Lieben und sucht den ihm zugeordneten festen Text "Jan Lieben" im Hilfsdatenspeicher 2 auf. Nach Auffinden dieses festen Textes "Jan Lieben" kennt sie auch die ihm zugeordnete Speicherplatznummer (22), unter der dieser Name im Hauptdatenspeicher 8 gespeichert ist.

Im Schritt S21 sendet das Sprachwählgerät 1 über den Datenbus die Speicherplatznummer und den festen Text zum Mobiltelefon 7. Das Mobiltelefon 7 sucht jetzt unter der übermittelten Speicherplatznummer (22) den im Hauptdatenspeicher 8 gespeicherten festen Text (Jan Lieben) und vergleicht diesen mit dem entsprechenden festen Text (Jan Lieben), der ihm vom Sprachwählgerät 1 in Schritt S21 übermittelt wurde.

Stimmen beide festen Texte überein, so sendet es im Schritt S22 über den Datenbus die zum festen Text zugehörige Telefonnummer von Jan Lieben (1740) zum Sprachwählgerät 1, das diesen dann im Schritt S23 zum Beispiel akustisch über den Lautsprecher 5 ausgibt. Gleichzeitig wird die Telefonnummer auch auf dem Display des Mobiltelefons 7 im Schritt S24 angezeigt.

Stimmen dagegen der vom Sprachwählgerät 1 im Schritt S21 übermittelte Text und der vom Mobiltelefon 7 aufgesuchte feste Text nicht überein, so wird im Schritt S25 über den Datenbus ein Fehlersignal zum Sprachwählgerät 1 übersandt, das eine entsprechende akustische Ausgabe über den Lautsprecher 5 zum Benutzer gibt, beispielsweise "keine Nummer gefunden". Eine entsprechende Ausgabe erfolgt im Schritt S27 zum Display des Mobiltelefons 7.

Es sei noch darauf hingewiesen, daß der Datenbus das Protokoll zwischen dem Mobiltelefon und einer mit ihm verbundenen externen Einrichtung ist, um Signalisierungsnachrichten auszutauschen.

Wie bereits eingangs erwähnt, ist die Kommunikationseinrichtung nach der Erfindung in der Lage, bei Änderungen der im Hauptdatenspeicher 8 des Mobiltelefons 7 gespeicherten Daten entsprechende Änderungen der zugeordneten Daten im Hilfsdatenspeicher 2 automatisch vornehmen zu können. Dies soll nachfolgend unter Bezugnahme auf die Fig. 6 erläutert werden.

Im Schritt S28 gibt ein Benutzer über entsprechende Befehlseingabetasten 16 des Mobiltelefons 7 entweder einen Befehl Löschen oder einen Befehl Ändern in das Mobiltelefon ein. Mit dem Befehl Löschen wird der zu löschende Name "Jan Lieben" eingegeben, um diesen Namen im Hauptdatenspeicher 8 zu löschen. Mit dem Befehl Ändern wird der Name "Jan Lieben" eingegeben, der z.B. unter einer neuen Speicherplatznummer des Hauptdatenspeichers 8 gespeichert werden soll, sowie die neue Speicherplatznummer.

Das Mobiltelefon 7 stellt nach Empfang des Befehls im Schritt S28 fest. daß der Name "Jan Lieben" unter der Speicherplatznummer 22 gespeichert ist, daß dieser Speicherplatznummer die Kennung SW zugeordnet ist, und daß fernerdas Sprachwählgerät 1 mit dem Mobiltelefon 7 verbunden ist. In diesem Fall können die Befehle Löschen bzw. Ändern ausgeführt werden. Wird festgestellt, daß kein Sprachwählgerät mit dem Mobiltelefon 7 verbunden ist, können die Befehle Löschen bzw. Ändern ignoriert werden. Es kann aber auch einem Benutzer anheim gestellt werden, dennoch den Löschvorgang bzw. Änderungsvorgang im Hauptdatenspeicher 8 durchzuführen, wenn er es wünscht.

Für den oben beschriebenen Fall der Verbindung des Sprachwählgerätes 1 mit dem Mobiltelefon 7 wird nach dem Schritt S28 der Schritt S29 durchgeführt. Wurde zuvor der Befehl Löschen eingegeben, so wird jetzt im Schritt S29 über den Datenbus der Befehl (Löschen (Speicherplatznummer, fester Text)) zum Sprachwählgerät 1 übertragen. Übertragen werden also die Speicherplatznummer 22 und der feste Text "Jan Lieben". Wurde dagegen im Schritt S28 der Befehl Ändern eingegeben, so wird jetzt im Schritt S29 über den Datenbus der Befehl (Ändern (Alte Speicherplatznummer, neue Speicherplatznummer, fester Text)) zum Sprachwählgerät 1 übertragen. Übertragen werden also für diesen Fall die alte Speicherplatznummer 22, die neue Speicherplatznummer, unter der der Name "Jan Lieben" gespeichert werden soll , und der feste Text "Jan Lieben".

Nach Empfang des entsprechenden Befehls im Schritt S29 sucht das Sprachwählgerät 1 im Hilfsdatenspeicher 2 die Speicherplatznummer 22 des Hauptdatenspeichers 8 auf und liest den dazugehörigen festen Text "Jan Lieben" aus dem Hilfsdatenspeicher 2 aus. Dieser aus dem Hilfsdatenspeicher 2 ausgelesene feste Text wird dann mit dem in Schritt S29 erhaltenen festen Text verglichen. Wird Gleichheit festgestellt. so wird in Schritt S30 über den Datenbus ein Befehl vom Sprachwählgerät 1 zum Mobiltelefon 7 übertragen, durch den im Falle des Löschens das Mobiltelefon 7 nunmehr den Namen "Jan Lieben" und die zugehörige Telefonnummer im Hauptdatenspeicher 8 löscht. Bezüglich dieses Löschvorgangs wird im nachfolgenden Schritt S31 ein Bestätigungssignal vom Mobiltelefon 7 zum Sprachwählgerät 1 übertragen, woraufhin das Sprachwählgerät 1 den Namen "Jan Lieben" und die ihm zugeordnete Speicherplatznummer im Hilfsdatenspeicher 2 löscht. Dieser Löschvorgang wird durch ein weiteres Bestätigungssignal im Schritt S32 vom Sprachwählgerät 1 zum Mobiltelefon 7 letzterem angezeigt, so daß dieses im darauffolgenden Schritt S33 dem Benutzer über sein Display anzeigt, daß die Löschung des Namens erfolgte ist.

Im Falle des Befehls Ändern wird nach Empfang des entsprechenden Befehls im Schritt S29 wiederum der Vergleich der festen Texte durchgeführt. Wird Übereinstimmung der festen Texte festgestellt, wird im Schritt S30 ein Änderungsbefehlssignal vom Sprachwählgerät 1 zum Mobiltelefon 7 übertragen, so daß im Hauptdatenspeicher 8 des Mobiltelefons 7 der feste Text "Jan Lieben" und die zugehörige Telefonnummer auf die zuvor eingegebene neue Speicherplatzadresse übertragen werden. Im Schritt S31 wird ein entsprechendes Bestätigungssignal zum Sprachwählgerät 1 geliefert, daß dann ebenfalls die Übertragung des Namens "Jan Lieben" von der alten auf die neue Speicherplatzadresse des Hauptdatenspeichers 8 durchführt. Mit anderen Worten wird dem Namen "Jan Lieben" im Hilfsdatenspeicher 2 die neue Speicherplatzadresse des Hauptdatenspeichers 8 zugeordnet. Ein entsprechendes Bestätigungssignal wird vom Sprachwählgerät 1 im Schritt S32 zum Mobiltelefon 7 übertragen, das daraufhin dem Benutzer im Schritt S33 über das Display anzeigt, daß die Änderung erfolgt ist.

Es sei darauf hingewiesen, daß die Kommunikation zwischen Mobiltelefon 7 und Sprachwählgerät 1 im Falle des Befehls Löschens oder des Befehls Ändern auch in anderer als der unter Fig. 6 angegebenen Weise erfolgen kann. Wichtig ist. daß eine Löschung bzw. Änderung einer Speicherplatzbelegung im Hauptdatenspeicher 8 in entsprechender Weise auch im Hilfsdatenspeicher 2 durchgeführt wird.

Wird nach dem Schritt S29 in Fig. 6 keine Gleichheit zwischen den zu vergleichenden festen Texten festgestellt, so meldet dies das Sprachwählgerät 1 dem Mobiltelefon 7 im Schritt S34. Je nach Betriebsmodus kann dann ein Lösch- bzw. Änderungsvorgang abgebrochen bzw. blockiert werden, oder es wird dem Benutzer durch das Mobiltelefon 7 freigestellt. ob er dennoch löschen bzw. ändern will oder nicht. Dies wird ihm über das Display im Schritt S 35 angezeigt.

Einige wichtige Vorteile der erfindungsgemäßen Kommunikationseinrichtung seien nachstehend nochmals erwähnt:
- Änderungen im Hauptdatenspeicher 8, z.B. Löschungen oder Umgruppierung von bereits gespeicherter Information auf andere Speicherplatznummern, lassen sich automatisch auch im Hilfsdatenspeicher 2 vornehmen, so daß die Verwaltung beider Speicher relativ einfach ist.
- Eine Vereinfachung der Verwaltung ergibt sich auch dadurch, daß im Hilfsdatenspeicher 2 nur Kurzwahlinformation gespeichert zu werden braucht. Es ist nicht erforderlich, hier schon die vollständige Telefonnummer des Teilnehmers abzulegen. Diese wird aus dem Hauptdatenspeicher 8 ausgelesen.
- Im Fall von neu hinzukommenden Namen in den Hauptdatenspeicher 8 werden diese dort manuell eingegeben. Eine entsprechende manuelle Eingabe kann auch im Hilfsdatenspeicher 2 erfolgen. Alternativ können aber beim Einlesen eines neuen Namens mit zugehöriger Telefonnummer im Hauptdatenspeicher 8 der neu eingegebene Name und die ihn aufnehmende Speicherplatznummer auch automatisch ausgelesen und in den Hilfsdatenspeicher 2 übertragen werden. Eine manuelle Dateneingabe in den Hilfsdatenspeicher 2 erübrigt sich daher.
- Natürlich kann der Dateninhalt des Hauptdatenspeichers 8 des Mobiltelefons 7 auch verändert werden, wenn das Mobiltelefon 7 nicht mit dem Sprachwählgerät 1 verbunden ist. Sind dann von der Datenänderung Datensätze betroffen, zu denen die Kennung des Sprachwählgerätes 1 gehört, so kann der Benutzer entscheiden, ob die Änderung durchgeführt werden soll oder nicht. Gegebenenfalls kann die Änderungsmöglichkeit auch blockiert werden, um nicht zu einer Datendisharmonie zwischen solchen im Hauptdatenspeicher 8 und solchen im Hilfsdatenspeicher 2 zu kommen. Stimmen dagegen die Kennung eines angeschlossenen Dateneingabegerätes 1 mit den Kennungen der zu ändernden Daten im Hauptdatenspeicher 8 überein, so werden die Datenänderungen unmittelbar ausgeführt.

## Patentansprüche

1. Kommunikationseinrichtung mit
- einem Telefongerät (7), das eine erste Steuereinrichtung (9) und einen Hauptdatenspeicher (8) zur Speicherung erster Daten aufweist, und
- wenigstens einem mit dem Telefongerät (7) verbindbaren Dateneingabegerät (1, 11, 12, 13), das eine zweite Steuereinrichtung (3) und einen Hilfsdatenspeicher (2) zur Speicherung von einen Teil der ersten Daten repräsentierenden zweiten Daten aufweist, über die auf die ersten Daten zugegriffen werden kann.

2. Kommunikationseinrichtung nach Anspruch 1, **dadurch gekennzeichnet, daß** beide Steuereinrichtungen (9. 31 so ausgebildet sind, daß durch sie bei einer Datenänderung in einem der Datenspeicher eine entsprechende Änderung der ihnen zugeordneten Daten im anderen der Datenspeicher vornehmbar ist.

3. Kommunikationseinrichtung nach Anspruch 2, **gekennzeichnet durch** ein Vergleichsmittel zum Vergleichen von zu ändernden Daten in einem der Datenspeicher mit ihnen zugeordneten Daten im anderen der Datenspeicher vor einer Datenänderung.

4. Kommunikationseinrichtung nach Anspruch 1, 2 oder 3, **dadurch gekennzeichnet, daß** das Telefongerät (7) Mittel (16) zur Eingabe von Befehlen bezüglich einer Änderung der im Hauptdatenspeicher (8) gespeicherten ersten Daten aufweist.

5. Kommunikationseinrichtung nach Anspruch 1, 2, 3 oder 4, **dadurch gekennzeichnet, daß** den jeweiligen Daten im Hauptdatenspeicher (8) eine Kennung (SW) eines mit dem Telefongerät (7) verbindbaren Dateneingabegerätes (1) zugeordnet ist.

6. Kommunikationseinrichtung nach einem der Ansprüche 1 bis 5, **dadurch gekennzeichnet, daß** das Telefongerät (7) ein Mobiltelefon ist.

7. Kommunikationseinrichtung nach einem der Ansprüche 1 bis 6, **dadurch gekennzeichnet, daß** das Dateneingabegerät als Sprachwählgerät (1), optisches Abtastgerät (11) oder elektronische Schnittstelle (12) ausgebildet ist.

## Claims

1. Communications device having
- a telephone set (7), which has a first control device (9) and a main data memory (8) for storing first data, and
- at least one data input unit (1, 11, 12, 13) which can be connected to the telephone set (7) and has a second control device (3) and an auxiliary data memory (2) for storing second data which represent a part of the first data, via which second data it is possible to access the first data.

2. Communications device according to Claim 1, **characterised in that** both control devices (9, 3) are designed such that, in the event of a data change in one of the data memories, they allow a corresponding change to be made to the data assigned to them in the other data memory.

3. Communications device according to Claim 2, **characterized by** a comparison means for comparing data to be changed in one of the data memories with data assigned to them in the other data memory, before a data change.

4. Communications device according to Claim 1, 2 or 3, **characterized in that** the telephone set (7) has means (16) for inputting commands relating to a change to the first data stored in the main data memory (8).

5. Communications device according to Claim 1, 2, 3 or 4, **characterized in that** the respective data in the main data memory (8) are assigned an identifier (SW) for a data input unit (1) which can be connected to the telephone set (7).

6. Communications device according to one of Claims 1 to 5, **characterized in that** the telephone set (7) is a mobile telephone.

7. Communications device according to one of Claims 1 to 6, **characterized in that** the data input unit is designed as a voice dialling unit (1), an optical scanning unit (11) or an electronic interface (12).

## Revendications

1. Dispositif de communication, comprenant :
- un appareil téléphonique (7), présentant un premier dispositif de commande (9) et une mémoire de données principale (8), pour le stockage de premières données, et
- au moins un appareil d'introduction de données (1, 11, 12, 13), susceptible d'être relié à l'appareil téléphonique (7), présentant une deuxième dispositif de commande (3) et une mémoire de données auxiliaires (2) pour le stockage de deuxièmes données, représentant une partie des premières données, par l'intermédiaire duquel on peut accéder aux premières données.

2. Dispositif de communication selon la revendication 1, **caractérisé en ce que** les deux dispositifs de commande (9, 3) sont réalisés de manière que, au moyen de ceux-ci, en cas de variation de données dans l'une des mémoires de données, une variation correspondante des données, leur étant associées, puisse être effectuée dans l'autre des mémoires de données.

3. Dispositif de communication selon la revendication 2, **caractérisé par** un moyen de comparaison pour comparer des données à modifier dans l'une des mémoires de données, à des données, leur étant associés, dans l'autre des mémoires de données, avant une modification de données.

4. Dispositif de communication selon la revendication 1, 2 ou 3, **caractérisé en ce que** l'appareil téléphonique (7) présente des moyens (16) pour introduire des ordres concernant une modification des premières données stockées dans la mémoire principale (8).

5. Dispositif de communication selon la revendication 1, 2, 3 ou 4, **caractérisé en ce qu'**aux données respectives, dans la mémoire de données principale (8), est associée une identification (SW) d'un appareil d'introduction de données (1) susceptible d'être relié à l'appareil téléphonique (7).

6. Dispositif de communication selon l'une des revendications 1 à 5, **caractérisé en ce que** l'appareil téléphonique (7) est un téléphone mobile.

7. Dispositif de communication selon l'une des revendications 1 à 6, **caractérisé en ce que** le groupe d'introduction de données est réalisé sous la forme d'appareil de sélection vocale (1), d'appareil d'exploration optique (11) ou bien d'interface électronique (12).
